# EUROPEAN PATENT SPECIFICATION

(11) **EP 1 836 745 B1**
(45) Date of publication and mention of the grant of the patent: **21.10.2009**
(21) Application number: 06700071.1
(22) Date of filing: 02.01.2006
(51) Int. Cl.: H01M 8/24, F16F 13/00

(54) **ARRANGEMENT FOR COMPRESSING FUEL CELLS IN A FUEL CELL STACK**
ANORDNUNG ZUR KOMPRIMIERUNG VON BRENNSTOFFZELLEN IN EINEM BRENNSTOFFZELLENSTAPEL
DISPOSITIF POUR COMPRIMER DES PILES A COMBUSTIBLE DANS UN ASSEMBLAGE DE PILES A COMBUSTIBLE

(30) Priority: 13.01.2005 FI 20055017
(43) Date of publication of application: 26.09.2007
(73) Proprietor: Wärtsilä Finland Oy, 65380 Vaasa (FI)
(72) Inventor: MAHLANEN, Timo, FI-00850 Helsinki (FI)
(74) Representative: Finnilä, Kim Larseman
(86) International application number: PCT/FI2006/050003
(87) International publication number: WO 2006/075050

(56) References cited:
- EP-A- 0 329 161
- EP-A- 1 284 521
- EP-A- 1 416 569
- DE-B- 1 068 952
- DE-C- 438 255
- US-A1- 2004 265 659

## Description

The present invention relates to a fuel cell stack as described in the preamble of claim 1.

A fuel cell is an apparatus by means of which fuel can be transformed directly into electricity via a chemical reaction. Hydrogen can be used as fuel, in some cases a mixture of hydrogen and carbon monoxide can also be used. Some fuel cell types are capable of so-called internal reforming, whereby also methane or methanol can be used as fuel. For the reaction, oxygen is also needed, and it is usually conveyed to the fuel cell in the form of air. The fuel cell includes an anode and a cathode, with electrolyte therebetween. Both the anode and cathode contain a catalyst for easing the chemical reactions. The electrolyte prevents direct mixing and combustion of fuel and oxidizer, but it allows a certain ion to pass through. A fuel cell does not have to be charged like a battery. Instead, it works as long as fuel and oxidizer are introduced hereto.

The advantages of fuel cells include good efficiency, silence and very small need of moving parts. For example, in fuel cells operating in so-called free convection mode there is no need for moving parts. Another advantage is that being only water or water vapour, the emissions are environmentally friendly and clean.

Fuel cell systems, which can comprise, e.g. solid oxide fuel cells (SOFC) or molten carbonate fuel cells (MCFC) or other suitable fuel cell types, include a number of single planar fuel cells located one on top of the other and they are insulated from each other by means of ceramic seals. Fuel cells and seals are tightly pressed against each other by means of tightening nuts and drawbars. Single fuel cells thus form a fuel cell stack, a number of which can further be connected in series or in parallel for further increasing voltage or current. An arrangement, in which a number of fuel cell stacks connected to each other are fastened to a substrate, via which the fuel inlet and exhaust gas outlet needed by the fuel cells are carried out, is called, for example, a fuel cell unit.

In practice, one of the problems of fuel cells is keeping the fuel cell stacks sealed and in even compression as the temperature of the fuel cell unit increases or fluctuates. A commonly used technique is the above-mentioned compressing of the fuel cells between bolts or drawbars. Because the temperature of the fuel cell stack will rise to a rather high level, compression springs are needed in one end of the drawbars in order to avoid the reducing of the compression force acting on the fuel cells due to the thermal expansion of the drawbars. As the fuel cells are in a high temperature, in an isolated space, the springs will have to be located outside the isolation due to temperature, because a spring will not operate as needed in high temperatures. In fuel cell systems the operation temperatures of fuel cells can increase to temperatures in excess of 750°C. However, springs located outside the isolation cause heat loss, which will in practice be excessive or it will at least decrease the efficiency of the fuel cells. Further, springs located outside the isolation, in the ends of the fuel cell stacks, increase the space requirement for the fuel cell unit.

An attempt to correct these problems is described, e.g. in European patent application EP 1416569 A2, which describes a solution for maintaining the compression tension as the temperature of the fuel cell stack increases. In this solution the mechanical springs are replaced by a gas-filled cushion that expands and thereby increases the compression of the fuel cell stack as the temperature increases. A gas-filled cushion alone, however, is not sufficient, because even in installation temperature, normally an approximately normal room temperature, the fuel cell stack must be compressed with a force of about 300-500 kg for achieving the necessary degree of sealing. If this compression force is created by means of the gas pressure of the cushion only, the gas pressure inside the cushion will increase to about threefold, with the volume of the cushion being the same, as the fuel cell stack reaches its operation temperature, i.e. about +750 °C or even more. Thus, if the pretightening pressure in room temperature is, for example, 6 bar, during operational situation the cushion must withstand a pressure of about 18 bar.

Further, the weld seams of the gas cushion are a problem with the invention according to the European patent application, the seams being subject to very large tensions and therefore prone to breakages.

The aim of the present invention is to eliminate the above-mentioned disadvantages and to accomplish as reliable a method and apparatus as possible for compressing a fuel cell stack so that the compression force of the fuel cell stack stays even and the degree of sealing of the fuel cell stack remains as good as possible in demanding, high and changing temperatures during the operation of the fuel cell apparatus. The arrangement according to the invention is characterized by what is disclosed in the characterizing part of claim 1. Other embodiments of the invention are characterized by what is disclosed in other claims.

The basic idea of a solution according to the invention is that fuel cell stacks are compressed by means of a spring means causing an even compression on the whole area of the fuel cell stack. Thus, the fuel cell stack is provided with one or more single spring means for directing to the fuel cells of the fuel cell stack both a mechanical spring force and a compression force caused by the medium as the temperature increases. The spring means comprises two metallic spring plates facing each other and forming a mechanical spring for directing a mechanical spring force to the fuel cells of the fuel cell stack. A space filled with a medium is located between the spring plates. As the temperature increases, the pressure of the medium increases, whereby the spring means directs a compression force to the fuel cells or the fuel cell stack. The thickness of the spring plates is 1.5 - 3 mm.

An advantage of an arrangement according to the invention is that the arrangement needed for compressing the fuel cell stack is small in size, does not cause extra heat losses and is more reliable in use than prior art and is also easier to manufacture. Another advantage is that due to the design the stresses affecting the weld seam of the spring means are small, whereby the spring means has a long service life. Another advantage of the arrangement is that due to its shape the spring means is centred in the space arranged for it, whereby the compression force is always even and installation is simple. Yet another advantage is that in the low temperatures of the installation phase the spring means acts like a normal diaphragm spring, causing the necessary pre-tightening of the fuel cell stack. Correspondingly, in the operation temperature of the fuel cells, as the length of the drawbars and the fuel cell stack increases due to thermal expansion, the pressure of the medium between the spring plates increases and its length along its longitudinal axis increases, i.e. the distance between the spring plates increases, whereby the spring means compresses the fuel cell stack with an increasing force, thereby compensating for the thermal expansion of the drawbars, and keeps the fuel cell stacks sealed. A further advantage is that even if the fuel cell stack is shutdown and allowed to cool and then started again, thereby heating, the mechanical spring property and the gas spring property of the spring means keeps the fuel cell stack constantly sealed.

In the following the invention is disclosed in more detail by means of an exemplary embodiment and by reference to the appended drawings, in which
- figure 1: illustrates one embodiment of a compression arrangement for fuel cell stacks seen from the side,
- figure 2: illustrates as a cross-sectional view the end of the fuel cell stack of figure 1,
- figure 3: illustrates the design of the spherical spring means used in the compression arrangement of figure 1 in a simplified, partial cross-section,
- figure 4: illustrates the spherical spring means used in the compression arrangement of figure 1 as a three-dimensional projection figure seen from above at an angle,
- figure 5: illustrates another spring means from above, which spring means can be used in a fuel cell stack compression arrangement according to figure 1,
- figure 6: illustrates, in cross-section, the spring means of figure 5.

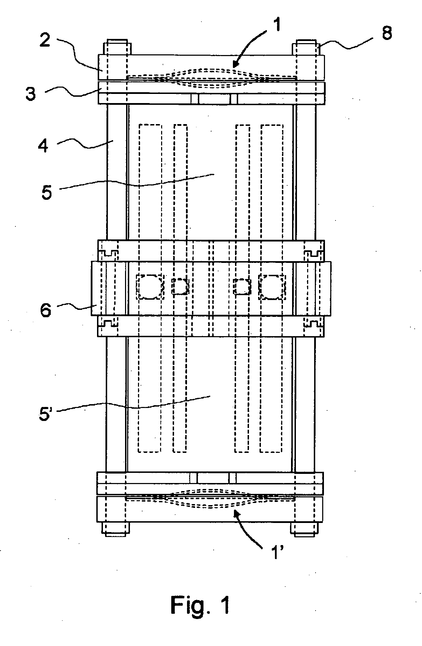

Figure 1 shows, as a simplified schematic frustration, a typical stack design of fuel cells in a fuel cell apparatus, in which the arrangement according to the invention can be used. Figure 1 illustrates a solution, in which the fuel cell stacks 5 and 5' are fastened and tightened by means of drawbars 4 located in essentially oversized installation holes and tightening nuts acting as tightening means 8 to a connector piece located between the fuel cell stacks and acting as a substrate 6. The connector piece includes, among others, the inlet and exhaust channels for the gases of the anode and cathode sides of the fuel cells. Spherical spring means 1 and 1' are located in the outer ends of the fuel cell stacks 5 and 5' between an upper pressure plate 2 and a lower pressure plate 3 so that the spring means 1 and 1' press the fuel cell stacks 5 and 5' against the external substrate 6.

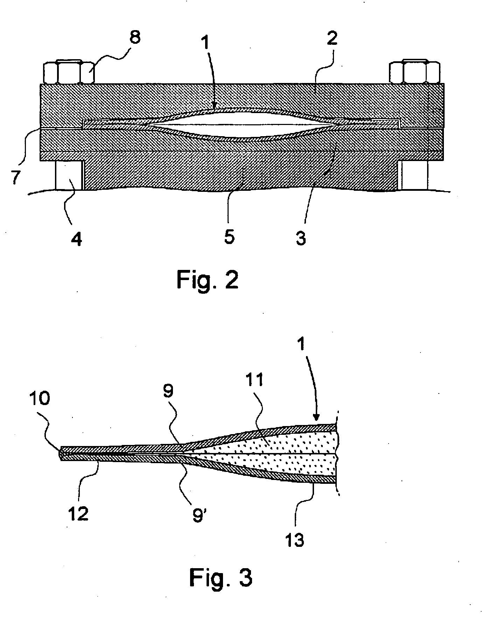

Figure 2 illustrates as a cross-sectional view the location of the spherical spring means 1 in the outer end of the fuel cell stack 5. The spring means 1 is installed between pressure plates 2 and 3, the mating surfaces of the pressure plates being shaped to correspond to the spherical shape of the spring means 1 and the shape of the collar-like edge. Both pressure plates 2 and 3 therefore have a spherical cavity corresponding to the spherical surface of the spring means 1. At least one of the pressure plates 2 additionally has a cavity corresponding to the shape of the collar of the spring means. Thus, the essentially spherical outer surface of the spring means 1 accurately centres the spring means 1 in its place, whereby the compression of the spring means 1 is evenly divided on the fuel cell stack 5 and installation is easy as well.

The spherical spring means 1 keeps the distance between the pressure plates 2 and 3 by its spring force and because the tightening means 8, i.e. the tightening nuts keep the upper pressure plate 2 in its place, the lower pressure plate 3 compresses the fuel cell stack 5 evenly downwards against the substrate 6. The cavities of the pressure plates 2 and 3 are dimensioned so in relation to the spring means 1 that in room temperature, in which the installation of the fuel cell apparatus is carried out, subsequent to the tightening of the drawbars 4 the spring means 1 compresses the pressure plate 3 like a mechanical spring, such as a diaphragm spring or a leaf spring, and thereby it also presses the fuel cell stack 5 against the substrate 6 with a force of about 300-500 kg, i.e. about 3-5 kN, thereby causing a sufficient pre-tightening for the fuel cell stack 5. As the temperature increases to the operation temperature of the fuel cells, i.e. to about +750 °C or more, the gas 11 inside the spring means 1 expands causing an increasing compressing force, thereby compensating for the lengthening of the drawbars 4 due to the thermal expansion. In the operation temperature of the fuel cells the compression force of the spring means 1 can be between 300 and 1200 kg, i.e. about 3 - 12 kN, most preferably the compression force is between 500 and 700 kg, i.e. about 5 - 7 kN.

The drawbars 4 can move in their installation holes in pressure plates 2 and 3 as well as, in this embodiment, freely through the substrate 6 in the direction of their longitudinal axis. The fuel cell stack 5 is compressed against the substrate 6 by means of drawbars 4 and tightening nuts. The spherical spring means 1 is dimensioned so that when the spring means 1 is assembled between the upper pressure plate 2 and the lower pressure plate 3, a clearance 7 is formed between the pressure plates at the edges of the pressure plates 2 and 3. As the compression force of the spring means 1 increases due to the increase of temperature and as the length of the drawbars 4 increases due to thermal expansion, the clearance 7 between the pressure plates 2 and 3 increases.

Figure 3 illustrates the design of the spherical spring means 1 in more detail and as a partial cross-sectional view. The spring means 1 consists of two round and disc-like spring plates 9 and 9' arranged against each other, the plates being similar and being made of suitable steel or other metal. A so-called essentially spherical cup portion 13 is pressed in the centre of each plate and the edge of the cup part is formed as an inclined collar 12 enveloping the cup portion. The spring plates 9 and 9' are positioned against each other and welded air-tightly to each other along the whole periphery of the circular collar. The tensions caused to the weld seam 10 stay small when the inclined collar 12 of the spring means 1 is suitably dimensioned both regarding the inclination and the diameter of the collar. Thus, the spring plates 9 and 9' are essentially fastened to each other along their outer peripheries and when moving towards the centre of the spring means 1 the spring plates 9 and 9' become more distant from each other the closer to the centre axis of the spring means one is, until the collar part is united with the essentially spherical cup portion 13 of the spring means, where increase of distance becomes greater. The inclination of the collar 12 in radial direction is suitably between 1:10 and 1:100, preferably for example 1:50. By means of a suitable inclination the collar 12 can also produce a mechanical effect, such as that produced by a diaphragm spring, i.e. the collars 12 form a mechanical spring directing a mechanical spring force to the fuel cells of the fuel cell stacks via the cup portion 13. Correspondingly, the relation of the width of the collar to the diameter of the spring means 1 can, for example, be from 1:3 to 1:6, suitably the relation can, for example, be 1:4 to 1:5, and preferably for example 1:4.8.

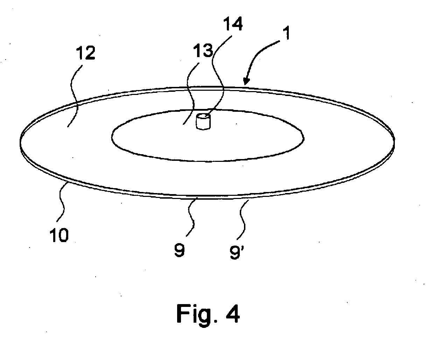

The outer surface of the cup portion 13 in the centre of the spring means 1 is essentially in the form of a spherical surface on both sides of the spring means so that in cross-section the thickest part of the spring means is in the centre axis of the spring means and the spring means becomes thinner towards the edge. The cup-like portion 13 forms a hollow space within the spring means, the space being filled with a suitable medium, such as gas 11, the pressure of which increases as the temperature increases and decreases as the temperature decreases. Thus, the length of the spring means, i.e. the distance between the opposite spring plates 9, 9' tends to accordingly change according to the temperature. Therefore, as the temperature increases, the compression force created by the spring means 1 increases and accordingly decreases, as the temperature decreases. The gas 11 inside the spring means 1 is preferably e.g. an inert gas that is chemically non-reagent and stable. In the low temperatures of the installation phase the spring means 1' therefore acts as a mechanical spring, creating the necessary pre-tightening for the fuel cell stack. The pressure of the gas inside the spring means 1 is in room temperature only e.g. about 1 to 4 bar, for example preferably 1.5 bar. Correspondingly, in the operation temperature of the fuel cells the pressure of the gas increases to about 3 to 12 bar, e.g. preferably to about 4.5 bar. When the fuel cell is occasionally shutdown and cooled and again started up and heated, the mechanical spring property and the gas spring property of the spring means 1 keep the fuel cell stack continuously sealed. Figure 4 also illustrates a valve 14 arranged in connection with the spring means 1, by means of which the amount of gas inside the spring means 1 can be increased or decreased or the gas can even be replaced by another gas.

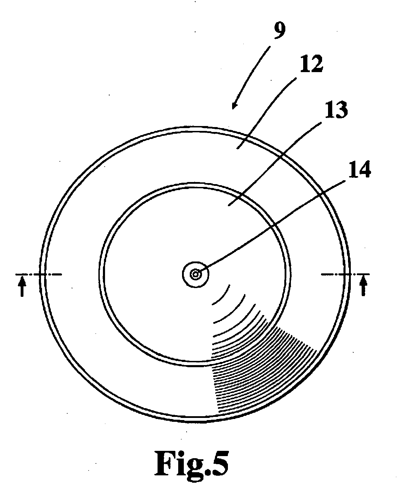

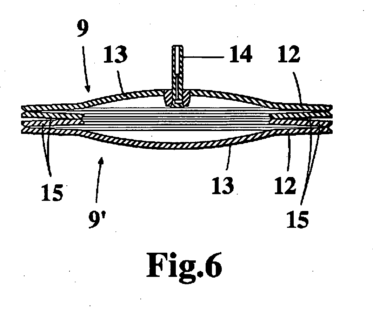

Figures 5 and 6 show another spherical spring means 1' that can be used in a compression arrangement of a fuel cell stack as shown in figure 1. The spring means 1 comprises two similar plate-like spring plates 9 and 9' arranged against each other. The spring plates 9, 9' are circular. The spring plates are made of a steel or other metal suitable for the purpose. Suitable materials include heat-resistant metal alloys, such as nickel-based alloys, for example Inconell (Ni-Cr-Fe alloy) or Haynes 230 (Ni-Cr-W-Mo alloy). In the centre of each spring plate 9, 9' is a spherical cup portion 13. The edge of the cup portion 13 is formed so as to be an inclined collar 12 encircling the cup portion 13. The collars 12 provide the necessary mechanical diaphragm spring effect, i.e. the collars 12 form a mechanical spring directing a mechanical spring force to the fuel cells of the fuel cell stack.

A spring assembly is located between the collars 12 of the spring plates 9, 9', by means of which the mechanical force directed to the fuel cell stacks by the spring means 1' is increased. The spring assembly comprises two spring rings 15 arranged against each other. The spring rings 15 are annular. The spring rings 15 are gas-tightly fastened to each other by their inner edges by means of, for example, welding. The outer periphery of each spring ring 15 is gas-tightly fastened to the outer periphery of each opposite collar 12 by means of, for example, welding. The inner peripheries of the spring rings 15 are fastened to each other and the spring rings 15 become separated from each other towards the outer periphery. Accordingly, the outer peripheries of the spring rings 15 are fastened to the collars 12 and towards the inner periphery the spring rings become separated from collars 12. The collars 12 and the spring rings 15 form a mechanical spring that directs in installation temperature a mechanical spring force to the fuel cells of the fuel cell stack via the cup portion 13. The strength of the mechanical spring force depends on the inclination of the collars 12 and the spring rings 15. Typically the inclination of the collars and the spring rings in the direction of the radius is 1:15 - 1:35. The relation between the width of the collars 12 and the spring rings 15 to the diameter of the whole spring means is between 1:2.5 and 1:35, typically about 1:2.8. In addition, the strength of the mechanical spring force depends on the thickness of the spring plates 9, 9'. The compression force created by the gas inside the spring means 1' depends, in addition to the gas pressure, the thickness of the spring plates 9, 9'. The thickness of the spring plates 9, 9' and the spring rings 15 is 1.5 to 3 mm, typically about 2 mm. The mechanical compression force of the spring means 1' can further be increased by arranging, for example, four stacked spring rings 15 between the collars 12.

The outer surface of the cup portion 13 in the centre of the spring means 1' is essentially in the form of a spherical surface on both sides of the spring means so that in cross-section the thickest part of the spring means is in the centre axis of the spring means and the spring means becomes thinner towards the edge. The cup-like portion 13 forms a hollow space within the spring means 1', the space being filled with a suitable medium, such as gas 11, the pressure of which increases as the temperature increases and decreases as the temperature decreases. Thus, the length of the spring means, i.e. the distance between the spring plates 9, 9' accordingly changes along with the temperature at the cup portion 13. The distance between the opposite spring plates 9, 9' increases as the pressure of the gas 11 increases and reduces as the pressure of the gas decreases. The gas 11 inside the spring means 1' is preferably an inert gas, for example, the gas being chemically non-reagent and stable. In the low temperatures of the installation phase the spring means 1 acts as a mechanical spring, creating the necessary pre-tightening for the fuel cell stack. The pressure of the gas inside the spring means 1' is, in room temperature, e.g. about 1 to 4 bar, for example preferably 1.5 bar. Correspondingly, in the operation temperature the pressure of the gas increases to about 3 to 12 bar, preferably to about 4.5 bar. As the temperature increases, the mechanical spring force directed by the spring means 1' to the fuel cells of the fuel cell stack is decreased and the compression force caused by the gas between the spring plates 9, 9' increases. Accordingly, as the temperature is reduced, the mechanical spring force is increased and the compression force caused by the gas is decreased. When the fuel cell is occasionally shutdown and cools, and again started up and heated, the mechanical spring property and the gas spring property of the spring means 1' keep the fuel cell stack continuously sealed. Figures 5 and 6 also illustrates a valve 14 arranged in connection with the spring means 1', by means of which the amount of gas inside the spring means 1' can be increased or decreased or the gas can even be replaced by another gas.

It is obvious to one skilled in the art that the invention is not limited to the above-mentioned examples, but it can be varied within the following claims. So, more than one spherical spring means 1,1' can be used for compressing one fuel cell stack 5. Also, the components, materials, shapes and dimensions used can differ from that described above as long as they are dimensioned and designed so as to achieve the result according to the invention.

It is also obvious to one skilled in the art that when seen from above, the spring means can have another shape instead of circular, such as elliptical, square or rectangular. In this case the spring rings 15 of the embodiment according to figures 5 and 6 have the same shape as the spring means.

It is also obvious to one skilled in the art that the solution according to the invention can be used as a spring solution for other applications than those described above.

It is further obvious to one skilled in the art that in addition to the combined mechanical spring and the gas or liquid spring expanding with the increase of temperature also separate mechanical springs and gas or liquid springs can be used together. In this case the inside shape between the pressure plates 2 and 3 is formed such that one or more mechanical springs, for example helical springs, diaphragm springs or disc springs can be arranged between the compression plates 2 and 3, the springs creating the necessary pre-tightening, and in addition to mechanical springs, one or more expanding cushions or the like, filled with a medium expanding as the temperature increases, such as a gas or a liquid, the cushion withstanding high temperatures and creating the necessary compression as the length of the drawbars increases due to thermal expansion.

The mechanical spring force is wholly or mainly created by means of the mechanical design of the spring. Accordingly, in the gas spring the spring force is wholly or mainly created by means of the pressure of the gas inside the spring.

## Claims

1. A fuel cell stack (5, 5') in which the compression of fuel cells against each other and a substrate (6) is carried out by means of at least spring force, the fuel cell stack (5, 5`) being provided with one or more single spring means (1, 1') for directing mechanical spring force and, as the temperature increases, the compression force created by a medium (11) of the spring means (1, 1') to the fuel cells of the fuel cell stack (5, 5'), the spring means (1, 1') comprising two metallic spring plates (9, 9') facing each other and forming a mechanical spring for directing mechanical spring force to the fuel cells of the fuel cell stack (5, 5'), and wherein a space (13) between the spring plates (9, 9') is filled with said medium (11), **characterized in that** the thickness of the spring plates (9, 9') is 1.5 - 3mm.

2. A fuel cell stack (5, 5') according to claim 1, **characterized in that** the edge portions of the spring plates (9, 9') are formed by collars (12), the collars being inclined towards each other so that the collars (12) are touching each other at the outer edge of the spring means (1) and they become evenly separated from each other towards the centre of the spring means (1).

3. A fuel cell stack (5, 5') according to claim 1, **characterized in that** the edge portions of the spring plates (9, 9') are formed by collars (12), the collars being inclined towards each other and having a mechanical spring assembly arranged between them

4. A fuel cell stack (5, 5') according to claim 3, **characterized in that** the spring assembly comprises two spring rings (15) arranged against each other, the inner edges of which are fastened to each other and the outer edges of which are fastened to the collars (12).

5. A fuel cell stack (5, 5') according to any of the preceding claims, **characterized in that** in the centre of the spring means (1) there is a hollow cup portion (13) shaped like a spherical surface and filled with a suitable medium, such as gas (11).

6. A fuel cell stack (5, 5') according to any of the preceding claims, **characterized in that** the spring means (1, 1') is arranged to operate as both a mechanical spring and as the temperature increases, as a gas spring.

7. A fuel cell stack (5, 5') according to any of the preceding claims, **characterized in that** the mechanical compression force of the spring means (1, 1') is created by means of the collars (12) or the collars (12) and a spring assembly between the collars (12) and the compression force of the medium is created by means of a medium (11) in space (13).

8. A fuel cell stack (5, 5') according to any of the preceding claims, **characterized in that** in order to compress the fuel cell stack (5, 5') the arrangement comprises drawbars (4) with their tightening means (8) and that the outer end of the fuel cell stack (5, 5') comprises a lower pressure plate (3) and an upper pressure plate (2) having installation holes for the drawbars (4) and a cavity essentially corresponding to the shape of the spring means (1), with the spring means (1) being arranged between the pressure plates (2 and 3) so that as the pressure plates (2 and 3) are in a pre-tightened state there is a clearance (7) between the pressure plates.

9. A fuel cell stack (5, 5) according to any of the preceding claims, **characterized in that** the spring means (1) is provided with a valve (14) for increasing or decreasing the amount of gas or replacing the gas inside the spring means (1).

## Patentansprüche

1. Brennstoffzellenstapel (5, 5') wobei die Zusammendrängung der Brennstoffzellen gegeneinander und gegen ein Substrat (6) durch zumindest Federkraft ausgeführt wird, wobei der Brennstoffzellenstapel (5, 5') mit einem oder mehreren einzelnen Federmitteln (1, 1') versehen ist, um mechanische Federkraft und, während die Temperatur ansteigt, die durch ein Medium (11) des Federmittels (1, 1') erzeugte Zusammendrängungskraft zu den Brennstoffzellen des Brennstoffzellenstapels (5, 5') zu richten, wobei das Federmittel (1, 1') zwei metallische Federplatten (9, 9') umfasst, die zueinander gerichtet sind und eine mechanische Feder bilden, um mechanische Federkraft zu den Brennstoffzellen des Brennstoffzellenstapels (5, 5') zu richten, und wobei ein Raum (13) zwischen den Federplatten (9, 9') mit dem Medium (11) gefüllt ist, **dadurch gekennzeichnet, dass** die Dicke der Federplatten (9, 9') 1,5 bis 3 mm beträgt.

2. Brennstoffzellenstapel (5, 5') nach Anspruch 1, **dadurch gekennzeichnet, dass** die Randabschnitte der Federplatten (9, 9') durch Teller (12) gebildet sind, wobei die Teller zueinander hin geneigt sind, so dass sich die Teller (12) am äußeren Rand des Federmittels (1) berühren und sich zur Mitte des Federmittels (1) hin gleichmäßig voneinander trennen.

3. Brennstoffzellenstapel (5, 5') nach Anspruch 1, **dadurch gekennzeichnet, dass** die Randabschnitte der Federplatten (9, 9') durch Teller (12) gebildet sind, wobei die Teller zueinander hin geneigt sind und einen dazwischen angeordneten mechanischen Federaufbau aufweisen.

4. Brennstoffzellenstapel (5, 5') nach Anspruch 3, **dadurch gekennzeichnet, dass** der Federaufbau zwei Federringe (15) umfasst, die gegenaneinander angeordnet sind, wobei ihre inneren Ränder aneinander befestigt sind und ihre äußeren Ränder an den Tellern (12) befestigt sind.

5. Brennstoffzellenstapel (5, 5') nach einem der vorhergehenden Ansprüche, **dadurch gekennzeichnet, dass** sich in der Mitte des Federmittels (1) ein hohler Schalenabschnitt (13) befindet, der wie eine kugelförmige Fläche geformt ist und mit einem geeigneten Medium wie etwa Gas (11) gefüllt ist.

6. Brennstoffzellenstapel (5, 5') nach einem der vorhergehenden Ansprüche, **dadurch gekennzeichnet, dass** das Federmittel (1, 1') dazu eingerichtet ist, sowohl als eine mechanische Feder als auch, während die Temperatur ansteigt, als eine Gasfeder zu wirken.

7. Brennstoffzellenstapel (5, 5') nach einem der vorhergehenden Ansprüche, **dadurch gekennzeichnet, dass** die mechanische Zusammendrängungskraft des Federmittels (1, 1') durch die Teller (12) oder die Teller (12) und einen Federaufbau zwischen den Tellern (12) erzeugt wird, und die Zusammendrängungskraft des Mediums durch ein Medium (11) im Raum (13) erzeugt wird.

8. Brennstoffzellenstapel (5, 5') nach einem der vorhergehenden Ansprüche, **dadurch gekennzeichnet, dass** die Anordnung zum Zweck des Zusammendrängens des Brennstoffzellenstapels (5, 5') Zugstangen (4) mit ihren Spannmitteln (8) umfasst, und dass das äußere Ende des Brennstoffzellenstapels (5, 5') eine untere Druckplatte (3) und eine obere Druckplatte (2) umfasst, die Einbauöffnungen für die Zugstangen (4) und einen Hohlraum, der im Wesentlichen der Form des Federmittels (1) entspricht, umfasst, wobei das Federmittel (1) so zwischen den Druckplatten (2 und 3) angeordnet ist, dass zwischen den Druckplatten ein Abstand (7) vorhanden ist, wenn sich die Druckplatten (2 und 3) in einem vorgespannten Zustand befinden.

9. Brennstoffzellenstapel (5, 5') nach einem der vorhergehenden Ansprüche, **dadurch gekennzeichnet, dass** das Federmittel (1) mit einem Ventil (14) versehen ist, um die Gasmenge zu erhöhen oder zu verringern oder das Gas im Inneren des Federmittels (1) zu ersetzen.

## Revendications

1. Bloc de piles à combustible (5, 5'), dans lequel la compression des piles à combustible les unes contre les autres et contre un substrat (6) est réalisée au moyen de la force d'au moins un ressort, le bloc de piles à combustible (5, 5') étant pourvu d'un ou de plusieurs moyens élastiques (1, 1') individuels, pour diriger la force mécanique de ressort, et la force de compression sur les piles à combustible du bloc de piles à combustible (5, 5') étant créée par un milieu (11) du moyen élastique (1, 1') lorsque la température augmente, le moyen élastique (1, 1') comprenant deux ressorts plats métalliques (9, 9') situés l'un en face de l'autre et formant un ressort mécanique pour diriger la force de ressort mécanique vers les piles à combustible du bloc de piles à combustible (5, 5'), et dans lequel un espace (13) entre les ressorts plats (9, 9') est rempli avec ledit milieu (11), **caractérisé en ce que** l'épaisseur des ressorts plats (9, 9') est comprise entre 1,5 et 3 mm.

2. Bloc de piles à combustible (5, 5') selon la revendication 1, **caractérisé en ce que** les portions de bord des ressorts plats (9, 9') sont formées par des colliers (12), les colliers étant inclinés les uns vers les autres, de sorte que les colliers (12) se touchent entre eux sur le bord extérieur du moyen élastique (1) et qu'ils deviennent espacés régulièrement les uns par rapport aux autres vers le centre du moyen élastique (1).

3. Bloc de piles à combustible (5, 5') selon la revendication 1, **caractérisé en ce que** les portions de bord des ressorts plats (9, 9') sont formées par des colliers (12), les colliers étant inclinés les uns vers les autres et possédant un système de ressort mécanique disposé entre eux.

4. Bloc de piles à combustible (5, 5') selon la revendication 3, **caractérisé en ce que** le système de ressort comprend deux bagues élastiques (15) disposées l'une contre l'autre, dont les bords intérieurs sont collés les uns aux autres et dont les bords extérieurs sont collés aux colliers (12).

5. Bloc de piles à combustible (5, 5') selon l'une quelconque des revendications précédentes, **caractérisé en ce qu'**au centre du moyen élastique (1) se trouve une portion de coupelle creuse (13), formée comme une surface sphérique et remplie avec un milieu approprié, tel que du gaz (11).

6. Bloc de piles à combustible (5, 5') selon l'une quelconque des revendications précédentes, **caractérisé en ce que** le moyen élastique (1, 1') est conçu pour fonctionner à la fois comme un ressort mécanique et comme un ressort à gaz lorsque la température augmente.

7. Bloc de piles à combustible (5, 5') selon l'une quelconque des revendications précédentes, **caractérisé en ce que** la force de compression mécanique des moyens élastiques (1, 1') est créée au moyen de colliers (12) ou de colliers (12) avec un système de ressort entre les colliers (12), et la force de compression du milieu est créée au moyen d'un milieu (11) dans l'espace (13).

8. Bloc de piles à combustible (5, 5') selon l'une quelconque des revendications précédentes, **caractérisé en ce que** pour la compression du bloc de piles à combustible (5, 5'), le système comprend des barres de traction (4) avec leurs moyens de serrage (8), et **en ce que** l'extrémité extérieure du bloc de piles à combustible (5, 5') comprend une plaque de pression inférieure (3) et une plaque de pression supérieure (2) possédant des trous de montage pour les barres de traction (4), ainsi qu'une cavité correspondant essentiellement à la forme des moyens élastiques (1), les moyens élastiques (1) étant disposés entre les plaques de pression (2 et 3), de sorte que lorsque les plaques de pression (2 et 3) sont dans un état préserré, un jeu (7) apparaît entre les plaques de pression.

9. Bloc de piles à combustible (5, 5) selon l'une quelconque des revendications précédentes, **caractérisé en ce que** le moyen élastique (1) est pourvu d'une soupape (14) pour augmenter ou diminuer la quantité de gaz ou pour remplacer le gaz à l'intérieur du moyen élastique (1).
